**Europäisches Patentamt**

**European Patent Office**

**Office européen des brevets**

(19)

(11) Numéro de publication : **0 322 298 B1**

## (12) FASCICULE DE BREVET EUROPEEN

(45) Date de publication du fascicule du brevet :
22.07.92 Bulletin 92/30

(51) Int. Cl.⁵ : **H02J 15/00, H01F 7/22**

(21) Numéro de dépôt : **88403242.6**

(22) Date de dépôt : **19.12.88**

(54) **Dispositif de stockage d'énergie électrique dans un supraconducteur.**

(30) Priorité : **21.12.87 FR 8717846**

(43) Date de publication de la demande :
**28.06.89 Bulletin 89/26**

(45) Mention de la délivrance du brevet :
**22.07.92 Bulletin 92/30**

(84) Etats contractants désignés :
**AT BE CH DE ES FR GB GR IT LI LU NL SE**

(56) Documents cités :
**GB-A- 1 038 554**
**US-A- 3 158 794**
**US-A- 4 032 959**
**US-A- 4 414 461**

(73) Titulaire : **CENTRE NATIONAL D'ETUDES SPATIALES**
**2, Place Maurice Quentin**
**F-75001 Paris (FR)**

(72) Inventeur : **Cacheux, Jean**
**12, Boulevard des Pyrénées Vigoulet-Auzil**
**F-31321 Castanet Tolosan (FR)**

(74) Mandataire : **Mongrédien, André et al**
**c/o BREVATOME 25, rue de Ponthieu**
**F-75008 Paris (FR)**

## Description

La présente invention a pour objet un dispositif de stockage d'énergie électrique dans un supraconducteur. Elle trouve une application générale dans le stockage d'énergie, que ce soit en laboratoire, dans l'industrie, à bord de véhicules, dans les satellites artificiels, les stations orbitales, les sondes spatiales, etc.

Dès l'apparition des premiers supraconducteurs, on a songé à stocker dans ces matériaux de l'énergie mise sous forme électrique, en engendrant un courant dans une spire supraconductrice. L'énergie E stockée dans une spire de rayon R placée dans le vide et parcourue par un courant I est :

$$E = \frac{1}{4} \mu_O I^2 \quad (1)$$

où $\mu_O$ est la perméabilité magnétique du vide.

Mais l'énergie susceptible d'être stockée dans de telles conditions reste faible. En effet, avec un courant de $10^5$ Acm$^{-2}$ et une spire de rayon 0,5m, on obtient une énergie stockée de 1570 Joules, soit 0,43 Wh. Naturellement, en augmentant le rayon de la spire, on augmente proportionnellement l'énergie stockée : avec une spire de 50m de rayon on obtiendra 43 Wh. Mais une telle énergie reste encore modeste.

Si l'on observe par ailleurs, qu'une telle spire, de 100 mètres de diamètre, doit être plongée dans l'hélium liquide, on conçoit que ce procédé de stockage soit plus théorique que pratique.

L'arrivée des nouveaux supraconducteurs à base d'oxydes, fonctionnant à des températures de l'ordre de 90 K, allège un peu la lourdeur de ces installations, notamment grâce au remplacement de l'hélium liquide par l'azote liquide. Celui-ci est en effet beaucoup plus facile à utiliser et présente une chaleur latente de vaporisation nettement plus élevée (198 J/g contre 20 J/g).

Néanmoins, la faiblesse des quantités d'énergie stockée demeure.

On pourrait penser associer à l'anneau de stockage un matériau à forte perméabilité magnétique pour augmenter proportionnellement l'énergie stockée (relation 1). Ainsi, avec une perméabilité égale à $10^5$, ce qui correspond au permalloy, on serait en droit d'attendre une énergie stockée égale à 43 kWh pour une spire de 0,5 m de rayon, parcourue par un courant de $10^5$ Acm$^{-2}$.

Malheureusement, un phénomène secondaire rend illusoire une telle solution : l'induction magnétique produite par la spire deviendrait très grande, ce qui ferait perdre sa propriété supraconductrice au matériau utilisé. Ainsi, avec un champ de $10^5$ A/m, l'induction dans le vide est de 0,125 Tesla. Avec le permalloy, cette induction passerait à $12,5.10^3$ Teslas, valeur incompatible avec l'induction critique des matériaux supraconducteurs connus, qui est de l'ordre de quelques Teslas. Même si l'on peut espérer réaliser des progrès à cet égard et atteindre, dans un proche avenir, des inductions critiques de l'ordre de la dizaine de Teslas, il reste que la solution préconisée est encore largement inappropriée.

La présente invention a justement pour but de remédier à ces inconvénients. Elle résout le problème de l'induction critique et autorise ainsi l'utilisation de matériaux à forte perméabilité magnétique. Grâce à l'invention, il est alors possible de stocker de grandes quantités d'énergie dans des conditions de mise en oeuvre très simples.

L'installation de l'invention présente en outre des dimensions très faibles, ce qui, du même coup, ouvre à ce moyen de stockage un champ d'applications très vaste, qui lui était jusqu'alors fermé. Ainsi, le dispositif de l'invention peut-il être aisément embarqué dans des véhicules genre automobiles par exemple, ou à bord de satellites artificiels.

L'invention permet d'atteindre ce résultat par l'utilisation de deux spires de matériau supraconducteur, couplées par mutuelle induction et par l'utilisation d'un matériau magnétique à haute perméabilité.

L'utilisation d'une seconde spire, en mutuelle induction avec la première, permet d'éliminer l'induction dans le matériau supraconducteur. En effet, la mise en circulation d'un courant dans la première spire entraîne la création d'un courant circulant dans le sens opposé dans la seconde, courant qui se maintient puisque le matériau est supraconducteur. L'induction résultante est alors nulle, ce qui lève la difficulté énoncée plus haut relative à l'existence d'une induction critique à ne pas dépasser.

Dès lors, il est possible d'utiliser un matériau à haute perméabilité magnétique placé à proximité des spires, pour augmenter la quantité d'énergie stockée : l'induction résultante restera en-dessous de l'inductance critique.

Les deux spires peuvent être disposées dans deux plans parallèles, l'une au-dessus de l'autre avec leurs axes confondus.

Mais on peut aussi disposer les spires dans un même plan, l'une à l'intérieur de l'autre.

Chacune des spires peut être constituée par des brins de matériau supraconducteur enrobés dans un matériau résistant et bon isolant électrique (de la silice par exemple). Deux telles spires peuvent être placées côte à côte. On peut aussi relier seulement une partie des brins à une source d'injection et d'extraction de courant, pour former la première spire au sens électrique du terme, et refermer les autres brins sur eux-mêmes pour former la seconde spire. On peut aussi entrelacer les différents brins.

Naturellement, l'invention ne se limite pas à l'utilisation d'un seul couple de spires. Elle englobe toutes les variantes à nombre quelconque de couples de spires. On peut par exemple constituer des enroulements hélicoïdaux imbriqués l'un exemple, ou à bord de satellites artificiels.

L'invention permet d'atteindre ce résultat par l'utilisation de deux spires de matériau supraconducteur, couplées par mutuelle induction et par l'utilisation d'un matériau magnétique à haute perméabilité.

L'utilisation d'une seconde spire, en mutuelle induction avec la première, permet d'augmenter la valeur de l'induction volumique par compression des lignes de champ et d'annuler pratiquement l'induction à l'extérieur des deux spires. En effet, la mise en circulation d'un courant dans la première spire entraîne la création d'un courant circulant dans le sens opposé dans la seconde, courant qui se maintient puisque le matériau est supraconducteur. L'induction résultante à l'extérieur est alors nulle, ce qui lève la difficulté énoncée plus haut relative à l'existence d'une induction critique à ne pas dépasser.

Il est ainsi possible d'utiliser un matériau à haute perméabilité et saturable, sur la surface du matériau supraconducteur, afin de ne pas atteindre l'induction critique, tout en augmentant la densité d'énergie stockée dans l'interface des deux spires (zone de compression magnétique).

Les deux spires peuvent être disposées dans deux plans parallèles, l'une au-dessus de l'autre avec leurs axes confondus.

Mais on peut aussi disposer les spires dans un même plan, l'une à l'intérieur de l'autre.

Chacune des spires peut être constituée par des brins de matériau supraconducteur enrobés dans un matériau résistant et bon isolant électrique (de la silice par exemple). Deux telles spires peuvent être placées côte à côte. On peut aussi relier seulement une partie des brins à une source d'injection et d'extraction de courant, pour former la première spire au sens électrique du terme, et refermer les autres brins sur eux-mêmes pour former la seconde spire. On peut aussi entrelacer les différents brins.

Naturellement, l'invention ne se limite pas à l'utilisation d'un seul couple de spires. Elle englobe toutes les variantes à nombre quelconque de couples de spires. On peut par exemple constituer des enroulements hélicoïdaux imbriqués l'un dans l'autre, ce qui est équivalent à des couples de spires connectés en série.

Le dispositif comprend en outre des moyens d'injection et d'extraction du courant dans la première spire. Tout moyen connu peut être utilisé, comme dans l'art antérieur, l'invention ne portant pas essentiellement sur ce point. On peut utiliser par exemple un dispositif magnétique à striction.

De toute façon, les caractéristiques et avantages de l'invention apparaîtront mieux à la lumière de la description qui va suivre. Cette description porte sur des exemples de réalisation donnés à titre explicatif et nullement limitatif et se réfère à des dessins annexés sur lesquels :

– la figure 1 représente schématiquement deux spires supraconductrices en mutuelle induction,

– la figure 2 montre en coupe un mode de réalisation du dispositif de l'invention,

– la figure 3 montre deux schémas électriques équivalents du dispositif de l'invention, et

– la figure 4 représente schématiquement le dispositif global de l'invention.

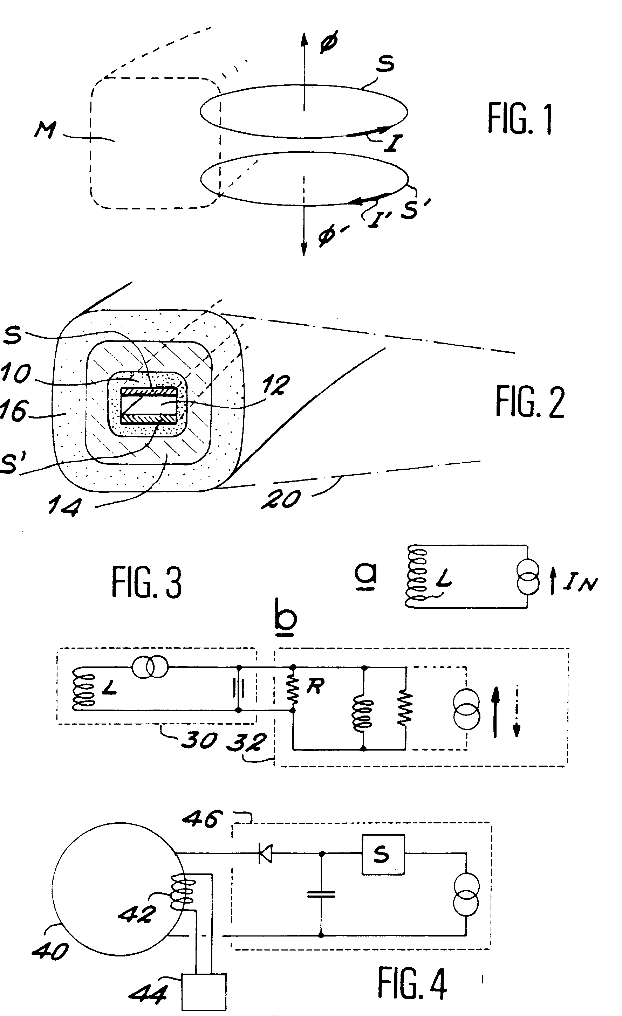

La figure 1 montre une spire S de matériau supraconducteur dans laquelle un courant I a été lancé, par un moyen non représenté mais qui sera décrit plus loin. L'induction magnétique $\phi$ créée par ce courant, induit un courant I′ dans la seconde spire S′ également supraconductrice. Il en résulte une induction $\phi$′ de sens opposé à $\phi$. La résultante d'induction, après excitation électrique, est sensiblement nulle. Cette situation se maintient aussi longtemps que le matériau constituant les spires demeure supraconducteur.

Un circuit magnétique M, à haute perméabilité, est disposé au voisinage des spires S et S′.

A titre d'exemple, les valeurs suivantes peuvent être utilisées :

– Courant critique du supraconducteur 109 Am$^{-2}$ (10$^5$ Acm$^{-2}$)

– Courant nominal dans les spires 4.10$^8$ Am$^{-2}$ (4.10$^4$ Acm$^{-2}$)

– Induction critique du supraconducteur : 2 Teslas

– Température critique du supraconducteur : 92 K

– Température d'utilisation : 80 K

– Section des spires : 5 x 0,2·10$^{-4}$m$^2$ (0,2 cm$^2$)

– Rayon des spires : 0,5 m

– Nombre de brins pour chaque spire : 25

Le coefficient de self-induction étant déterminé par la formule bien connue :

$$L = \mu R(\text{Log}(8R/r) - 7/4)$$

il vient :

$$L = 9,17 \text{ H}$$

Le coefficient de couplage mutuel peut être pris égal au dixième de cette valeur, soit :

$$M = 0,9 \text{ H}$$

L'énergie pouvant être emmagasinée est alors :

$$W = M I^2 = 1,44 \cdot 10^9 \text{ J}$$

Soit :

$$W = 400 \text{ kWh}$$

Avec une efficacité de charge et de décharge voisine de 20% on obtient finalement une énergie de 80 kWh.

Cette énergie emmagasinée tend à se libérer par le jeu de forces tendant à repousser les spires l'une par rapport à l'autre. La force de répulsion est proportionnelle à $B^2/2$ $\mu_r$ par une unité de surface. Par ailleurs, chaque spire tend à augmenter son coefficient de self-induction, c'est-à-dire tend à s'élargir.

Ces forces sont d'importance et imposent des structures mécaniques adaptées. C'est un point essentiel pour les systèmes mobiles ou embarquables à bord de stations orbitales. Le couplage assuré par le matériau à haute perméabilité magnétique permet déjà d'offrir une première ceinture de résistance comme le montre la variante d'exécution de la figure 2.

Le dispositif représenté sur la figure 2 comprend deux spires plates S et S' en matériau supraconducteur entourées d'une structure torique 10 résistante, par exemple en fibre de carbone ou en matériau composite. Par ailleurs, cette structure doit être isolante thermiquement. On peut utiliser à cette fin des matériaux dits "superisolants".

Cette structure torique délimite un canal 12 dans lequel circule un fluide réfrigérant, par exemple de l'azote liquide, du néon liquide ou tout autre, voire de l'hélium liquide si les conditions opératoires le permettent.

Un circuit magnétique 14, de forme torique, entoure la structure 10. Ce circuit peut être en permalloy ou tout autre matériau à haute perméabilité magnétique et être en outre superisolant.

L'ensemble est disposé dans une structure externe torique 16, par exemple en fibre de carbone et en superisolant.

Une structure radiale 20 complète l'ensemble.

Le calcul de la force de répulsion est complexe et entièrement subordonné à la détermination de la distribution de l'induction magnétique. En calculant la pression à partir de la valeur maximale de l'induction magnétique, on aboutit à :

$$P = 100 \text{ MPa}$$

Cette pression s'exerce sur toute la surface de la partie 14 de couplage en matériau à haute perméabilité magnétique, qui assurera la première structure de maintien mécanique des deux spires. La structure interne 12 participera au maintien des spires. Elle sera réalisée par exemple par un enroulement de fibres de carbone.

La fibre de carbone possède des caractéristiques électriques et magnétiques appropriées à cette application :
- Résistance à la rupture : 3000 MPa
- Module d'Young : 300 000 MPa
- Densité : 1,5

A titre explicatif, on peut réaliser un dispositif caractérisé par les paramètres suivants :
- Spires en matériau supraconducteur :
  - volume : $3,2 \cdot 10^{-4}$ m³
  - masse : 12 kg
- Couplage magnétique :
  - volume : 0,01 m³
  - masse (Permalloy d=8.9) : 89 kg
- Ceinture en fibre de carbone :
  - volume : 0,023 m³
  - masse : 35 kg
- Isolation :
  - masse : 22 kg
- Système cryogénique :
  - type à azote liquide

- liquéfacteur à compresseur et détendeur Joule-Thomson
- masse de fluide : 4 kg
- consommation de frigories : 5 W
- puissance du groupe : 30 W
- masse totale : 18 kg
- électronique de conditionnement : 20 kg soit au total 200 kg.

En ce qui concerne la charge et la décharge en énergie du dispositif de l'invention, on peut utiliser la propriété de criticité magnétique des matériaux supraconducteurs. En effet, on sait que ceux-ci sont parfaitement diamagnétiques jusqu'à une valeur de l'induction appelée "induction critique", où la supraconduction disparaît peu à peu par effet de striction dû à la pénétration progressive du champ magnétique dans le volume du matériau. Cette propriété permet de construire de véritables vannes électriques.

En termes de schémas électriques équivalents, on passe d'une spire à coefficient de self-induction pure, comme indiqué sur la figure 3, schéma (a) où l'on voit une inductance L et un générateur fictif de courant IN, à une spire complexe, comme représenté sur le schéma (b), où un tronçon limité 30 présente une valeur de self-induction élevée avec une partie supraconductrice réduite, et une autre région 32 périphérique se comportant en résistance pure. Il est ainsi possible d'injecter, par un circuit extérieur, une quantité d'électricité donnée qui correspondra à chaque fois, à un incrément d'ouverture de la partie de la spire contrôlée par le champ magnétique supplémentaire. L'extraction de l'électricité s'effectue par la procédure inverse.

Bien entendu, les actions du champ de striction et du système d'injection ou d'éjection doivent être rigoureusement contrôlées.

La figure 4 montre le dispositif complet avec le double anneau de stockage 40, un dispositif de striction comportant un enroulement 42 alimenté par une source de courant 44 et un circuit d'injection de courant 46.

## Revendications

1. Dispositif de stockage d'énergie électrique, comprenant au moins une spire (S) de matériau supraconducteur, un moyen (42, 44, 46) pour injecter un courant dans cette spire et pour extraire le courant de cette spire, caractérisé par le fait qu'il comprend en outre une seconde spire (S') de matériau supraconducteur couplée par mutuelle induction à la première spire (S), et par le fait qu'il comprend un matériau magnétique (M) à haute perméabilité à proximité des deux dites spires.

2. Dispositif selon la revendication 1, caractérisé par le fait qu'il comprend deux spires identiques coaxiales (S, S') placées l'une au-dessus de l'autre dans deux plans parallèles.

3. Dispositif selon la revendication 1, caractérisé par le fait que les deux spires (S, S') sont disposées à l'intérieur d'un tore (14) réalisé en matériau magnétique à haute perméabilité.

4. Dispositif selon l'une quelconque des revendications 1 à 3, caractérisé par le fait que l'ensemble des deux spires S, S') est disposé à l'intérieur d'au moins un tore (10) en matériau résistant.

5. Dispositif selon la revendication 4, caractérisé par le fait que le matériau résistant est en fibre de carbone.

6. Dispositif selon la revendication 4, caractérisé par le fait que le matériau résistant est en matériau composite.

7. Dispositif selon l'une quelconque des revendications 1 à 5, caractérisé par le fait que l'ensemble des deux spires (S, S') est disposé dans au moins un tore (16) en matériau bon isolant thermique.

8. Dispositif selon la revendication 4, caractérisé par le fait que le tore (10) en matériau résistant délimite un canal (12) dans lequel circule un fluide réfrigérant.

9. Dispositif selon l'une quelconque des revendications 1 à 8, caractérisé par le fait que les spires (S, S') sont en forme d'anneaux plats constitués chacun par des fibres supraconductrices.

10. Dispositif selon la revendication 1, caractérisé par le fait que le moyen d'injection et d'extraction comprend un moyen (42, 44) pour appliquer sur une partie d'une spire une induction magnétique réglable autour d'une valeur critique.

11. Dispositif selon la revendication 1, caractérisé par le fait que le matériau à haute perméabilité magnétique (M) est le permalloy.

**Patentansprüche**

1. Vorrichtung zum Speichern elektrischer Energie mit wenigstens einer Wicklung (S) aus supraleitendem Material, einer Vorrichtung (42, 44, 46) zum Injizieren eines Stromes in diese Wicklung und zum Extrahieren des Stromes aus dieser Wicklung, gekennzeichnet durch die Tatsache, daß sie außerdem eine zweite Wicklung (S') aus einem supraleitendem Material umfaßt, die durch gegenseitige Induktion mit der ersten Wicklung gekoppelt ist, und durch die Tatsache, daß sie ein magnetisches Material (M) hoher Permeabilität in der Nähe der beiden Wicklungen umfaßt.

2. Vorrichtung nach Anspruch 1, gekennzeichnet durch die Tatsache, daß sie zwei identische, koaxiale Wicklungen (S, S') umfaßt, die übereinander in zwei parallelen Ebenen angeordnet sind.

3. Vorrichtung nach Anspruch 1, gekennzeichnet durch die Tatsache, daß die beiden Wicklungen (S, S') im Innern eines Torus (14) angeordnet sind, der aus einem magnetischen Material hoher Permeabilität besteht.

4. Vorrichtung nach einem der Ansprüche 1 bis 3, gekennzeichnet durch die Tatsache, daß die Gesamtheit der beiden Wicklungen (S, S') im Innern von wenigstens einem Torus (10) aus widerstandsfähigem Material angeordnet ist.

5. Vorrichtung nach Anspruch 4, gekennzeichnet durch die Tatsache, daß das widerstandsfähige Material aus Kohlenstoffasern besteht.

6. Vorrichtung nach Anspruch 4, gekennzeichnet durch die Tatsache, daß das widerstandsfähige Material aus Verbundmaterial besteht.

7. Vorrichtung nach einem der Ansprüche 1 bis 5, gekennzeichnet durch die Tatsache, daß die Gesamtheit der beiden Wicklungen (S, S') in wenigstens einem Torus (16) aus einem thermisch gut isolierenden Material angeordnet ist.

8. Vorrichtung nach Anspruch 4, gekennzeichnet durch die Tatsache, daß der Torus (10) aus widerstandsfähigem Material einen Kanal (12 begrenzt, in dem eine Kühlflüssigkeit zirkuliert.

9. Vorrichtung nach einem der Ansprüche 1 bis 8, gekennzeichnet durch die Tatsache, daß die Wicklungen (S, S') in der Form flacher Ringe vorliegen, die jeweils aus supraleitenden Fasern bestehen.

10. Vorrichtung nach Anspruch 1, gekennzeichnet, durch die Tatsache, daß die Vorrichtung zum Injizieren und zum Extrahieren eine Vorrichtung (42, 44) zum Anlegen einer um einen kritischen Wert regelbaren magnetischen Induktion auf einen Teil einer Wicklung umfaßt.

11. Vorrichtung nach Anspruch 1, gekennzeichnet durch die Tatsache, daß das Material mit hoher magnetischer Permeabilität (M) das Permalloy ist.

**Claims**

1. Electrical energy storage apparatus comprising at least one superconductor material coil (S), a means (42,44,46) for injecting a current into said coil and for extracting the current therefrom, characterized in that it also comprises a second superconductor material coil (S') coupled by mutual induction to the first coil (S) and in that it comprises a high permeability magnetic material (M) in the vicinity of the two coils.

2. Apparatus according to claim 1, characterized in that it comprises two identical coaxial coils (S,S') placed one above the other in two parallel planes.

3. Apparatus according to claim 1, characterized in that the two coils (S,S') are located within a torus (14) made from a high permeability magnetic material.

4. Apparatus according to any one of the claims 1 to 3, characterized in that the two coils (S,S') are placed within at least one strong material torus (10).

5. Apparatus according to claim 4, characterized in that the strong material is of carbon fibre.

6. Apparatus according to claim 4, characterized in that the resistant material is a composite material.

7. Apparatus according to any one of the claims 1 to 5, characterized in that the two coils (S,S') are placed in at least one torus (16) of a good thermal insulating material.

8. Apparatus according to claim 4, characterized in that the strong material torus (10) defines a channel (12) in which flows a cooling fluid.

9. Apparatus according to any one of the claims 1 to 8, characterized in that the coils (S,S') are in the form of flat rings, each constituted by superconducting fibres.

10. Apparatus according to claim 1, characterized in that the injection and extraction means comprise a means (42,44) for applying a magnetic induction regulatable about a critical value to part of a coil.

11. Apparatus according to claim 1, characterized in that the high magnetic permeability material (M) is permalloy.

FIG. 1

FIG. 2

FIG. 3

FIG. 4